Europäisches Patentamt

(19) European Patent Office    (11) Publication number:    **0 181 358**

Office européen des brevets    **B1**

(12)    **EUROPEAN PATENT SPECIFICATION**

(45) Date of publication of the patent specification:    (51) Int. Cl.⁴: **A 01 C 7/00,** A 01 C 7/04
29.06.88

(21) Application number: **85901994.5**

(22) Date of filling: **11.04.85**

(86) International application number:
**PCT/DK 85/00035**

(87) International publication number:
**WO 85/04547 (24.10.85 Gazette 85/23)**

(54) **A SOWING MACHINE.**

(30) Priority: **12.04.84 DK 1357/84**

(43) Date of publication of application:
**21.05.86 Bulletin 86/21**

(45) Publication of the grant of the patent:
**29.06.88 Bulletin 88/26**

(84) Designated Contracting States:
**AT BE CH DE FR GB IT LI LU NL SE**

(56) References cited:
**DE-A-2 105 786**
**US-A-3 355 102**
**US-A-3 422 776**
**US-A-3 537 091**

(73) Proprietor: **MASKINFABRIKEN TAARUP A/S, DK-5300 Kerteminde (DK)**

(72) Inventor: **LARSEN, Borge, Kystvej 29, DK- 5300 Kerteminde (DK)**
Inventor: **RIIS, Arne, Rynkeby Bygade 10, DK- 5350 Rynkeby (DK)**

(74) Representative: **MacFarlane, John Anthony Christopher, HASELTINE LAKE & CO. Hazlitt House 28, Southampton Buildings Chancery Lane, London WC2A 1AT (GB)**

## Description

The invention concerns a sowing machine of the type defined in the introductory portion of claim 1. Sowing machines of this kind are known form US-A-3 422 776 and US-A-3 355 102.

Such sowing machines make it possible in practice continuously to read the number of seeds sown per m² so that the percentage sown too much or too little with respect to the desired one can be readily determined, and the machine can be adjusted accordingly.

However, sowing of exactly the desired amount of seeds per unit of area is conditional upon the counted number of seeds being correct, which is often not the case when two or more seeds pass the seed counter at the same time and are therefore counted by the counter as a single seed.

The object of the invention is to provide a sowing machine of the present type which ensures more accurate counting of the seeds sown.

This object is achieved in that the sowing machine is constructed as stated in the characterizing portion of claim 1 because the spreading of the seeds eliminates or at any rate minimizes the risk of two or more seeds passing the seed counter at the same time.

The spreading means may be formed by one or two air nozzles, as stated in claims 2, 3 and 4, or by a rotary brush, as stated in claim 5.

The invention will be explained in more detail below with reference to the drawing, in which

fig. 1 is a schematic vertical section through parts of an embodiment of the sowing machine of the invention,

fig. 2 is a perspective view of a chute with an air nozzle to spread the seeds,

fig. 3 is a schematic vertical section through parts of another embodiment of the sowing machine of the invention, and

fig. 4 is a perspective sectional view of a channel section with two air nozzles to spread the seeds.

In the drawing the numeral 10 designates the seed box of a sowing machine, said box extending in the full width of the machine and containing the seed corn 11 to be sown. As shown, the lower portion of the seed box is hopper-shaped in cross-section and has a plurality of bottom openings 12 defined between the inclined bottom wall 13 and the lower edge of a seed shutter 14, which is associated with each opening and is slidably mounted on the inclined rear wall 15 of the seed box. A bottom flap 17 is pivotally mounted on a bracket 16 below each bottom opening and has a curved top side forming an elongation of the bottom wall 13. Between the rear edge of each bottom flap 17 and the lower edge of the corresponding seed shutter 14 is mounted a seed roller 18, which is designed in a generally known manner and has circumferentially arranged pockets to receive and feed the seeds. All seed rollers are firmly mounted on a common, rotatable shaft 19. When the seed roller is rotated in the direction shown by an arrow 20, it carries seeds upwards above the edge of the bottom flap 17 from which they drop down to a trough-shaped chute 21. The spacing between the bottom flap edges and the seed rollers can be adjusted in a known and not shown manner by joint rotation of all the bottom flaps, and, additionally, each individual bottom flap can be separately adjusted by means of a screw 22.

The seed corn drops down from the chute 21 in a seed tube 23 associated with the outlet in question and leading to its respective coulter (not shown). One or more of the seed tubes 23 accomodate a seed counter 24. To eliminate or at any rate minimize the risk of two or more seeds passing the seed counter at the same time and of consequently being counted as one seed, their speed is increased with a consequent spreading of the seeds by means of a weak air flow applied through a downwardly directed nozzle 25, which is disposed above the chute 21 and is connected to a source (not shown) of compressed air.

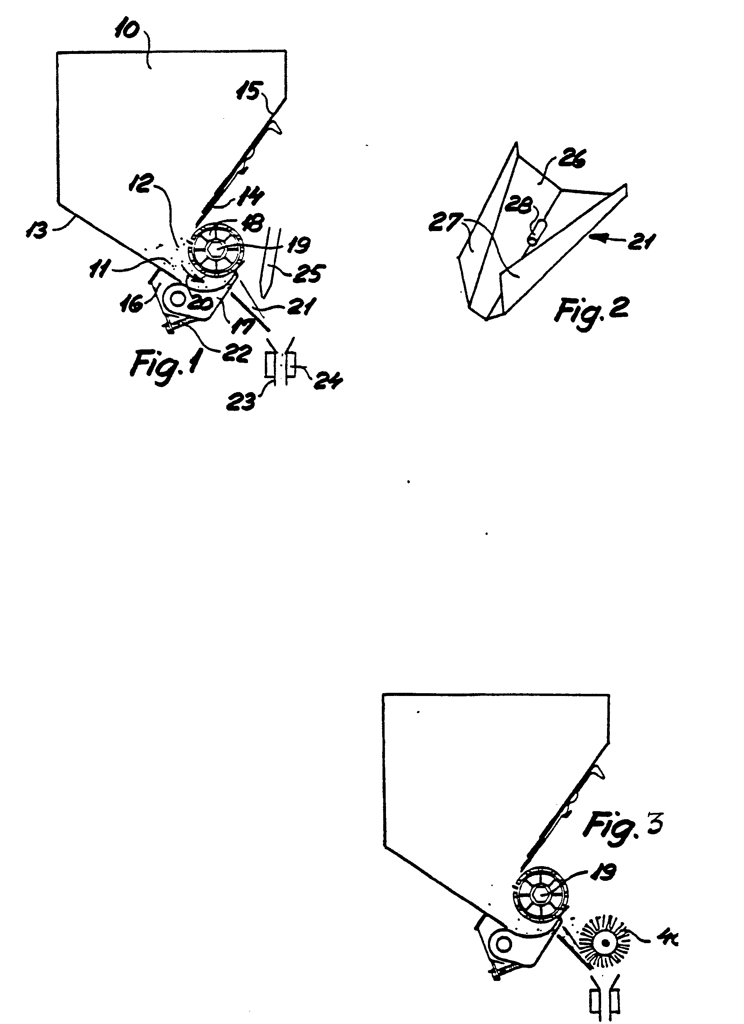

Fig. 2 shows an amended location of the air supply tube in connection with a special embodiment of the chute 21. This chute has a bottom portion 26 with a cross-section in the shape of an open V and with a downwardly decreasing width as well as two substantially vertical side walls 27 extending upwardly from the side edges of the V-shaped portion. The air supply tube, which is designed by 28 here, is passed through the bottom of the V-shaped portion 26 and is bent downwardly towards this bottom.

The seed counter 24 includes a transmitter for inframed light ans a receiver for the electronic equipment to actuate the transmitter and the receiver and to amplify the signals emitted from the latter.

The counting signals from the seed counter 24 are applied to a recording apparatus in a computer (not shown), which also receives signals from a conventional area meter (not shown) and is thus able to display both the number of seeds sown at any time per m² and the total seed rate.

The embodiment shown in fig. 3 differs from that of fig. 1 only in that it has a rotary brush 40 instead of the air nozzle 25 to spread and accelerate the seeds. This brush is so mounted on a shaft 41 parallel with the seed roller shaft 19 that the bristles sweep the bottom and the chute 21 during rotation.

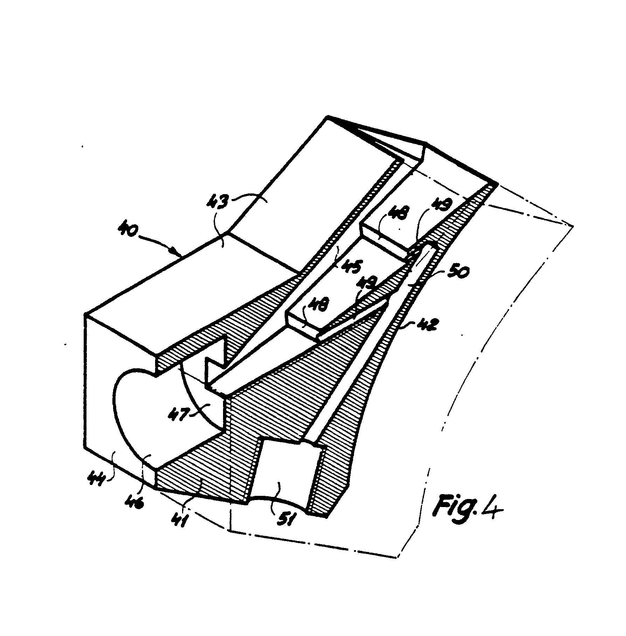

The channel section of fig. 4, which is generally designated by 40, can be incorporated in a channel equipped with a seed counter, instead of the chute 21, figs. 1 and 2. It consists of a block 41 of a suitable moulding material, e.g. plastics, with a curved front side 42, along which the rear edge of the bottom flap 17 can move, an angular top side 43 and a plane, rectangular rear side 44. The through-going channel consists of an inlet portion 45 with a rectangular cross-section which tapers in the flow direction and a cylindrical outlet portion 46 in whose rear end 47 the inlet portion terminates. The bottom of the inlet portion is stepped, comprising three steps. Air channels 49 terminate in the end faces 48 of the two first steps, said air channels emerging from a third channel 50 communicating with a threaded hole 51 formed in the underside of the block 41 to receive a threaded plug (not shown), by means of which the air channels can be connected to a source (not shown) of compressed air.

During passage through the channel section 40, the seeds are thus subjected to the action of an air jet two times in succession. This double action ensures effective spreading of the seeds.

The details of the sowing machine of the invention can be arranged in other ways than those shown in the drawing and described in the foregoing. For instance, the transmitter and receiver of the seed counter may be arranged to transmit and to receive other forms of beams than infra-red light. It is also possible to have the seed counter control the adjusting means of the sowing machine to adjust the seed rate per $m^2$ automatically through suitable, generally known control circuitry.

## Claims

1. A sowing machine with a plurality of coulters which receive seeds from a seed box through individual channels, at least one of which is equipped with a seed counter to count the seeds passing through the channel, said machine having means to adjust the flow of seeds supplied to the channels and having an automatic area meter, characterized in thateach of the channels equipped with a seed counter has seed spreading, means that serves to accelarate the passing seeds towards the seed counter before they arrive at the seed counter with a consequent spreading of the seeds.

2. A sowing machine according to claim 1, characterized in that the spreading means are formed by at least one nozzle to generate an air flow substantially in the direction of seed motion in the channel.

3. A sowing machine according to claim 2, characterized by two air nozzles spaced in the direction of seed motion in the channel.

4. A sowing machine according to claim 3, characterized in that the portion of the channel in which spreading takes place has a stepped bottom with three step faces and two end faces disposed substantially at right angles to the step faces, and that the nozzles are formed by two air channels terminating in their respective end faces substantially at right angles thereto.

5. A sowing machine according to claim 1, wherein part of each channel is formed by an upwardly open, trough-shaped chute, characterized in that the spreading means are formed by a substantially disc-shaped, rotary brush so disposed with the axis of rotation substantially at right angles to the chute that the bristles sweep the bottom of the chute with the same direction of motion as the seeds.

## Patentansprüche

1. Drillmaschine mit mehreren Drillscharen, denen der Samen vom Saatkasten durch jeweils ein Saatleitungsrohr zugeführt wird, von denen mindestens ein Saatleitungsrohr mit einem Samenzähler zum Zählen der durch das Rohr passierenden Samen versehen ist, wobei Mittel zur Regelung des dem Saatleitungsrohr zugeführten Saatgutstroms sowie ein automatischer Flächenmesser vorgesehen sind, dadurch gekennzeichnet, dass jedes mit einem Zähler versehene Saatleitungsrohr eine Zerstreivorrichtung zum Beschleunigen der in Richtung zum Zähler passierenden Samen aufweist, bevor die Samenkörner am Zähler ankommen.

2. Drillmaschine nach Ansprucn 1, dadurch gekennzeichnet, dass die Zerstreivorrichtung aus mindestens einer Düse zur Erzeugung eines Luftstroms im wesentlichen in der Richtung der Samenbewegung in Saatleitungsrohr besteht.

3. Drillmaschine nach Anspruch 2, dadurch gekennzeichnet, dass zwei Luftdüsen in gegenseitigem Abstand in Richtung der Samenbewegung in Saatleitungsrohr vorgesehen sind.

4. Drillmaschine nach Anspruch 3, dadurch gekennzeichnet, dass im Zerstreibereich des Saatleitungsrohrs, in abgestufter Boden mit drei Stufenflächen und zwei annähernd rechtwinklig zu diesen orientierten Stirnflächen vorgeshen ist, und dass die Düsen von zwei an jeweils einer Stirnfläche annähernd rechtwinklig zu dieser mündenden Luftkanälen bildet sind.

5. Drillmaschine nach Anspruch 1, wobei ein Teil jedes Saatleitungsrohrs als oben offene, trogförmige Rutsche ausgebildet ist, dadurch gekennzeichnet dass die Zerstreivorrichtung als im wesentlichen scheibenförmige umlaufende Bürste ausgebildet ist, deren Drehachse annähernd rechtwinklig zur Rutsche derart angeordnet ist, dass die Bürsten den Rutschenboden in der Förderrichtung des Saatguts fegen.

## Revendications

1. Semoir comportant une pluralité de couteaux qui reçoivent les semences d'une boîte à semence par l'intermédiaire de conduits individuels, dont un au moine est équipé d'un compteur de semence qui compte les semences passant dans le conduit, ledit semoir étant doté d'un moyen de réglage de l'écoulement des semences délivrées dans les conduits et d'un appareil de mesure de surface automatique, caractérisé en ce que chacun des conduits équipé d'un compteur de semences disposé d'un moyen de dispersion de semence qui sert à accélérer le passage des semences en direction du compteur de semence, avant qu'elles n'arrivent au compteur de semence, avec une dispersion correspondante des semences.

2. Semoir selon la revendication 1, caractérisé en ce que les moyens de dispersion sont constitués par au moins une buse destinée à créer un flux d'air sensiblement dans la direction du mouvement de la semence dans le conduit.

3. Semoir selon la revendication 2, caractérisé par deux buses à air espacées l'une de l'autre dans la direction du mouvement de la semence dans le conduit.

4. Semoir selon la revendication 3, caractérisé en ce que la partie du conduit dans laquelle se produit la dispersion possède un fond étagé comportant trois surfaces de degrés et deux surfaces d'extrémités disposées sensiblement à angle droit par rapport aux surfaces de degrés, et en ce que les buses sont constituées par deux conduits d'air dont les extrémités respectives se terminent sensiblement à angle droit par rapport aux surfaces d'extrémité.

5. Semoir selon la revendication 1, dans laquelle une partie de chaque conduit est constituée par une goulotte ouverte vers le haut, ayant une forme de baquet, caractérisé en ce que les moyens de dispersion sont constitués par une brosse rotative sensiblement en forme de dispersion comportant un axe de rotation disposé perpendiculairement à la goulotte de telle façon que les poils balaient le fond de la goulotte dans le même sens de déplacement que les semences.

0 181 358

Fig.1

Fig.2

Fig.3

1

Fig. 4